Europäisches Patentamt

**European Patent Office**

**Office européen des brevets**

(19)

(11) Veröffentlichungsnummer: **0 212 044**
**A1**

(12) ## EUROPÄISCHE PATENTANMELDUNG

(21) Anmeldenummer: **86100950.4**

(51) Int. Cl.⁴: **A 47 G 19/34**

(22) Anmeldetag: **24.01.86**

(30) Priorität: **29.07.85 DE 3527124**

(43) Veröffentlichungstag der Anmeldung: **04.03.87**
**Patentblatt 87/10**

(84) Benannte Vertragsstaaten: **AT BE CH DE FR GB IT LI LU NL SE**

(71) Anmelder: **Hofmann, Raimund, Kreuzstrasse 11, D-6983 Kreuzwertheim (DE)**

(72) Erfinder: **Hofmann, Raimund, Kreuzstrasse 11, D-6983 Kreuzwertheim (DE)**

(74) Vertreter: **Reinhard, Skuhra, Weise, Leopoldstrasse 51, D-8000 München 40 (DE)**

(54) **Behälter mit wenigstens zwei Kammern zur Aufnahme flüssiger und pulverförmiger Substanzen, insbesondere Kaffeepulver, Milch und/oder Zucker.**

(57) Ein Behälter mit mehreren im wesentlichen nebeneinander liegenden Kammern (6, 7, 8) weist an einer seiner Stirnseiten (2) eine Dosiervorrichtung (16) auf, die im wesentlichen durch eine Kammer (31) vorbestimmten Volumens gebildet ist. Bei einer Ausführungsform ist die Kammer (31) zwischen einer Beschickungsstellung und einer Entladestellung relativ zum Behälter bewegbar. Bei einer weiteren Ausführungsform wird die Kammer durch Betätigung einer Scheibe (22, 39) über die Beschickungsöffnung (17) mit einer der Kammern (6, 7, 8) in Verbindung gebracht. Durch Betätigung der Scheibe (22, 39) läßt sich die Beschickungsöffnung (17) schließen und durch Betätigung einer weiteren Scheibe eine Entladeöffnung (29) zu der Kammer öffnen. An der zur Dosiervorrichtung abgewandten Seite des Behälters sind weitere, durch Deckel od.dgl. verschließbare Ausgabeöffnungen vorgesehen. Bei einer weiteren Ausführungsform sind die Ausgabeöffnungen nahe der anderen Stirnseite umfangsmäßig und durch einen Stellring verschließbar ausgebildet.

# REINHARD · SKUHRA · WEISE

## PATENTANWÄLTE · EUROPEAN PATENT ATTORNEYS

Reinhard · Skuhra · Weise · Leopoldstraße 51 · D-8000 München 40

DR. ERNST STURM (1951-1980)
DR. HORST REINHARD
DIPL.-ING. UDO SKUHRA
DIPL.-ING. REINHARD WEISE

LEOPOLDSTRASSE 51
D-8000 MÜNCHEN 40

TELEFON    : 0 89/33 40 78
TELEX      : 5 212 839 isar d
TELEFAX : 089/340 14 79 (II + III)
TELEGRAMM : ISARPATENT

0212044

| Ihr Zeichen/your ref. | Unser Zeichen/our ref. | Datum/date |
|---|---|---|
| | P 2360  S/kn | 24. Januar 1986 |

Hofmann GmbH, Kreuzwertheim

---

## Behälter mit wenigstens zwei Kammern zur Aufnahme flüssiger und pulverförmiger Substanzen insbesondere Kaffepulver, Milch und/oder Zucker

---

Die Erfindung betrifft einen Behälter mit wenigstens zwei Kammern zur Aufnahme flüssiger und pulverförmiger Substanzen, insbesondere Kaffeepulver, Milch und/oder Zucker.

Es sind bereits Behälter bekannt, die mehrere Kammern zur Aufnahme pulverförmiger Substanzen enthalten, wobei die pulverförmigen Substanzen über an der oberen Stirnseite ausgebildete Ausgabeöffnungen aus dem Behälter entnommen werden können.

Der Erfindung liegt die Aufgabe zugrunde, einen Behälter gemäß dem Oberbegriff des Patentanspruchs 1 zu schaffen, der die dosierte Ausgabe wenigstens einer der Substanzen ermöglicht.

Diese Aufgabe wird erfindungsgemäß durch die im kennzeichnenden Teil des Patentanspruchs 1 angegebenen Merkmale gelöst.

Die Erfindung schafft einen Behälter, bei dem eine Dosiervorrichtung an einer der beiden Stirnseiten, d.h. an der oberen oder unteren Stirnseite des Behälters vorgesehen ist und die Dosiervorrichtung mit einer der Kammern des Behälters über eine Beschickungsöffnung in Verbindung gebracht werden kann. Auf diese Weise läßt sich die vorzugsweise in einer der Kammern enthaltene pulverförmige Substanz, beispielsweise wasserlösliches Kaffeepulver, dosiert aus dem Behälter entnehmen, während gleichzeitig die anderen Kammern die notwendigen Zutaten für Kaffee, beispielsweise Milch und/oder Zucker enthalten. Bei einer Ausführungsform ist die Dosiervorrichtung in einem Aufsatz gelagert, der an der unteren Stirnseite des Behälters befestigt ist und die Dosiervorrichtung in Form einer Kammer enthält. Die Dosiervorrichtung besteht im allgemeinen aus einer an die Grundform des Behälters angepaßten Scheibe mit zwei zueinander konzentrischen Ringflanschen, wobei zwei zwischen den Ringflanschen verlaufende Seitenwände eine etwa dreieckförmige Kammer der Dosiervorrichtung festlegen. Nach unten ist die Kammer offen und wird durch ein zusätzliches Teil, z. B. eine zusätzliche Scheibe oder den Boden des Aufsatzes oder dergleichen im zusammengesetzten Zustand des Behälters mit der Dosiervorrichtung abgedeckt. In der die Ringflansche tragenden Scheibe ist eine mit einer Beschickungsöffnung in Deckung bringbare Öffnung zur Kammer vorgesehen, wobei die Beschickungsöffnung im Boden des Behälters ausgebildet ist und einen Zugang zwischen der Dosiervorrichtung und einer der Kammern des Behälters ermöglicht. Bei einer Ausführungsform ist die Kammer zusammen mit dem Aufsatz gegenüber dem Behälter drehfähig vorgesehen. Bei einer abgewandelten Ausführungsform dient der Aufsatz als Führung bzw. als Gehäuse für die gegenüber diesem Aufsatz bewegbare Kammer der Dosiervorrichtung, wobei die Kammer innerhalb des Aufsatzes verschiebbar oder um die Behälterachse drehfähig angeordnet ist. Bei einer weiteren Ausführungsform ist die Kammer der Dosiervorrichtung stationär gegenüber dem Behälter innerhalb des Aufsatzes vorgesehen, wobei das Füllen der Kammer der Dosiervorrichtung durch eine zwischen der Kammer der Dosiervorrichtung und dem Behälter drehfähig gelagerte Scheibe in eine solche Stellung erreicht wird, in welcher eine in der drehfähigen Scheibe ausgebildete Öffnung eine Verbindung zwischen der Beschickungsöffnung des Behälters und der Kammer der Dosiervorrichtung hervorruft. An der zu dieser Scheibe entgegengesetzten Seite der Kammer der Dosiervorrichtung ist eine weitere Scheibe vorgesehen, die ebenfalls eine Öffnung aufweist und die Kammer nach unten abschließt oder zum Zwecke der Ausgabe der in der Kammer der Dosiervorrichtung enthaltenen Substanz soweit drehbar ist, daß eine in ihr ausgebildete Öffnung die Kammer nach unten freigibt. Sämtliche Kammern im Behälter sind im wesentlichen nebeneinander liegend ausgebildet und die Zahl der Kammern ist variierbar, so können beispielsweise zwei, drei oder mehr Kammern vorgesehen sein. Besonders vorteilhaft ist die Ausbildung von drei Kammern, nämlich einer Kammer für wasserlösliches Kaffeepulver, eine Kammer für Zucker und eine Kammer für Milch. Den Kammern, welche Zucker und Milch enthalten, sind an der zur Dosiervorrichtung abgewandten Seite des Behälters durch Kappen, Klappdeckel oder dergleichen verschließbare Ausgabeöffnungen zugeordnet. Bei dieser Ausführungsform wird damit erreicht, daß das zu dosierende Gut an der Unterseite des Behälters in dosierter Menge ausgegeben wird, während das nicht zu do-

sierende Gut an der Oberseite des Behälters durch Verkippen
des gesamten Behälters entnommen werden kann. Nach einer
weiteren vorteilhaften Ausführungsform ist das zu dosierende
Gut durch Kippen des Behälters von der Oberseite des Behälters
entnehmbar, während die Ausgabeöffnungen für Milch und/oder
Zucker umfangsmäßig des Behälters ebenfalls an der oberen
Stirnseite ausgebildet und durch einen Drehring verschließbar
sind.

Bei derjenigen Ausführungsform, bei welcher sich die Dosiervorrichtung an der unteren Stirnseite des Behälters befindet,
erübrigt sich ein Kippen des Behälters zum Zwecke der Ausgabe des zu dosierenden Gutes, wenn die Entleerungsöffnung
an der zum Behälter abgewandten unteren Stirnseite des
Aufsatzes vorgesehen ist.

Die Erfindung schafft somit einen Behälter zur Aufnahme
mehrerer Substanzen, insbesondere flüssiger oder pulverförmiger Substanzen, der zumindest die dosierte Ausgabe
einer der Substanzen auf einfache Weise sicherstellt,
während die anderen Substanzen mit nicht dosierbarem Volumen
entnehmbar sind. Der Behälter eignet sich insbesondere zur
Aufnahme von wasserlöslichem Kaffeepulver und den Zutaten
wie Milch und Zucker, wobei die Größe der Kammer der Dosiervorrichtung so gewählt ist, daß das darin aufnehmbare
Volumen der Menge für eine Tasse Kaffee entspricht.

Im folgenden werden bevorzugte Ausführungsformen des Behälters zur Erläuterung weiterer Merkmale an Hand der Zeichnung beschrieben. Es zeigen:

Fig. 1 einen Schnitt einer ersten Ausführungsform des Behälters entlang der Linie I - I' in Fig. 2

Fig. 2a,b eine Draufsicht auf den Behälter nach Fig. 1 entlang
der Linie II - II' und auf die Dosiervorrichtung,

Fig. 3 die Darstellung eines bevorzugten Deckels,

Fig. 4 eine auseinandergezogene Darstellung einer gegenüber

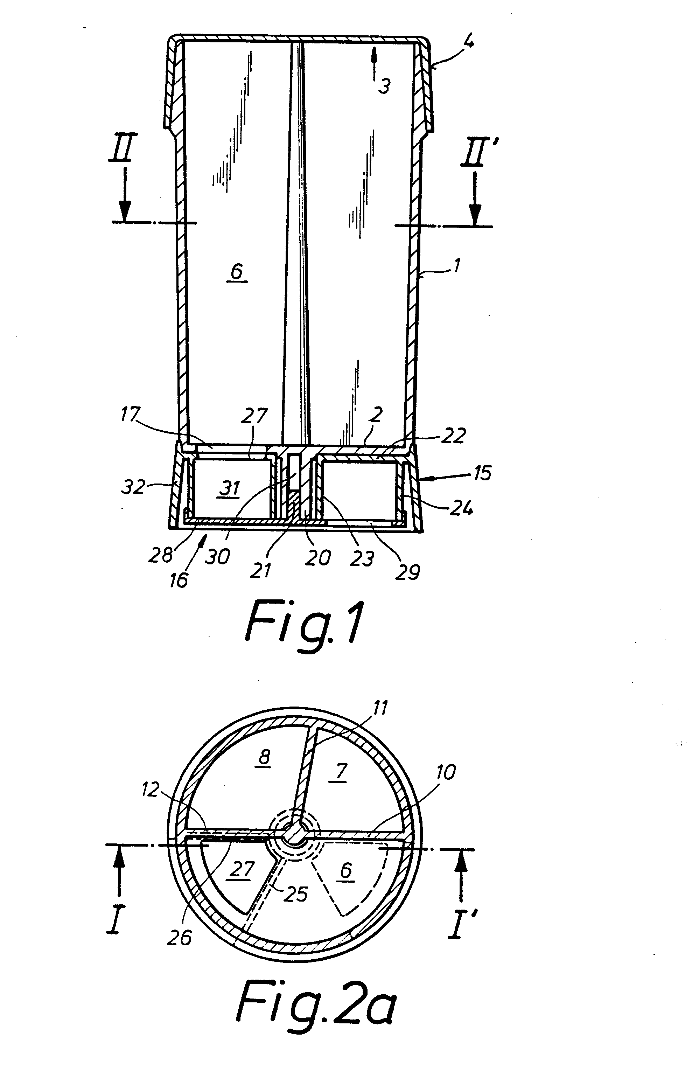

Fig. 1 abgewandelten Ausführungsform des Behälters

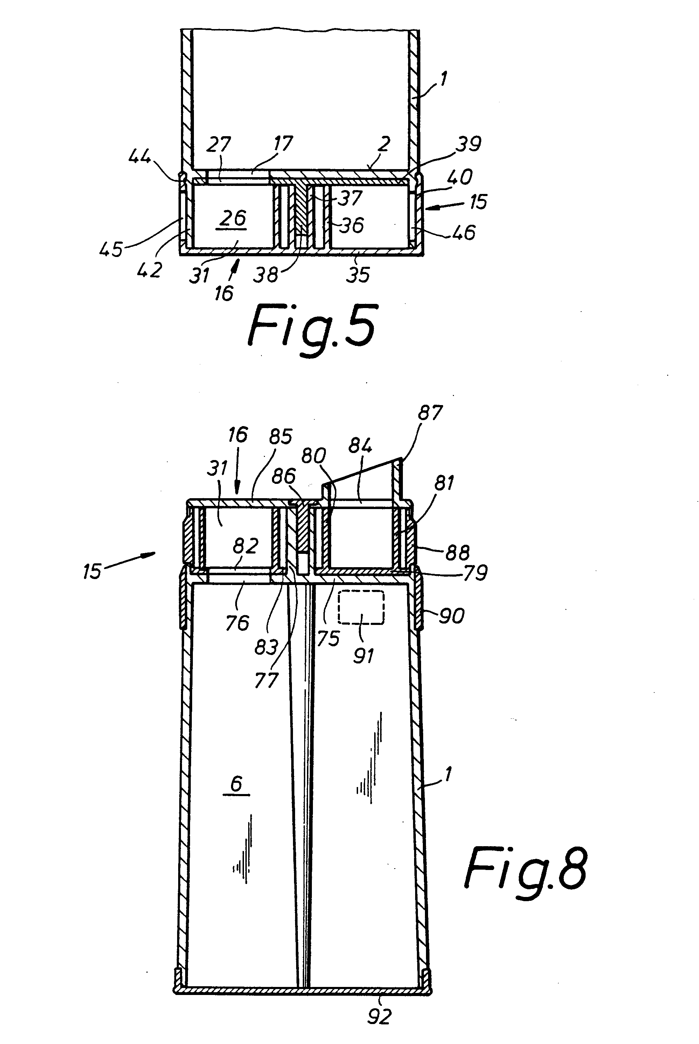

Fig. 5 eine weiter abgewandelte Ausführungsform des Behälters
mit Dosiervorrichtung,

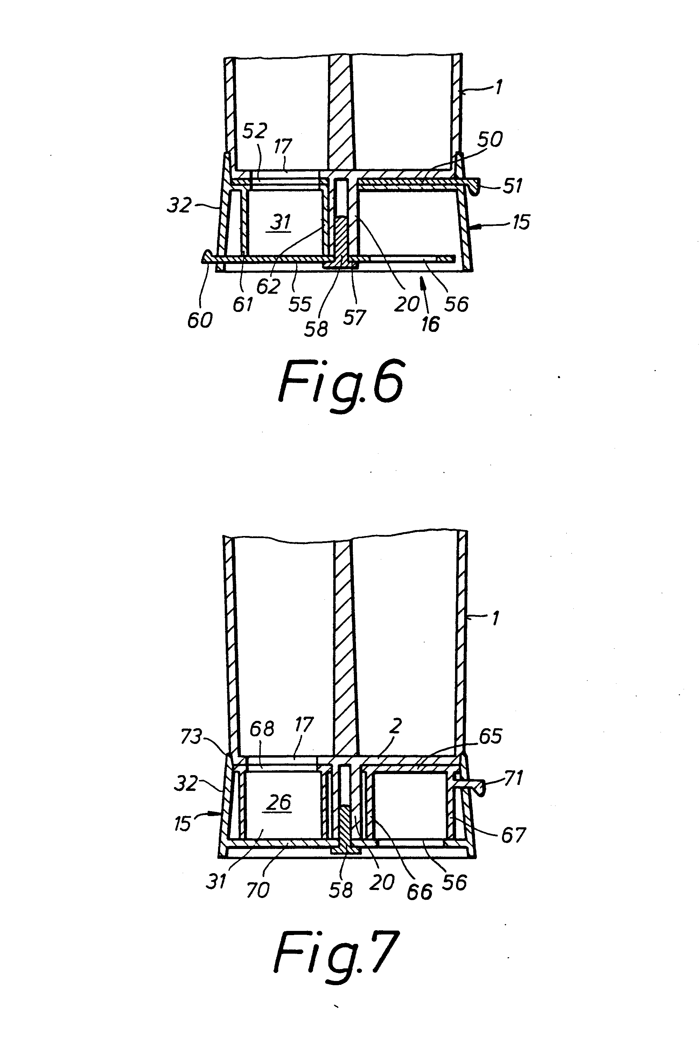

Fig. 6 und 7 weitere Ausführungsformen eines Behälters, bei
dem die Dosiervorrichtung an seiner unteren Stirnseite
ausgebildet ist,

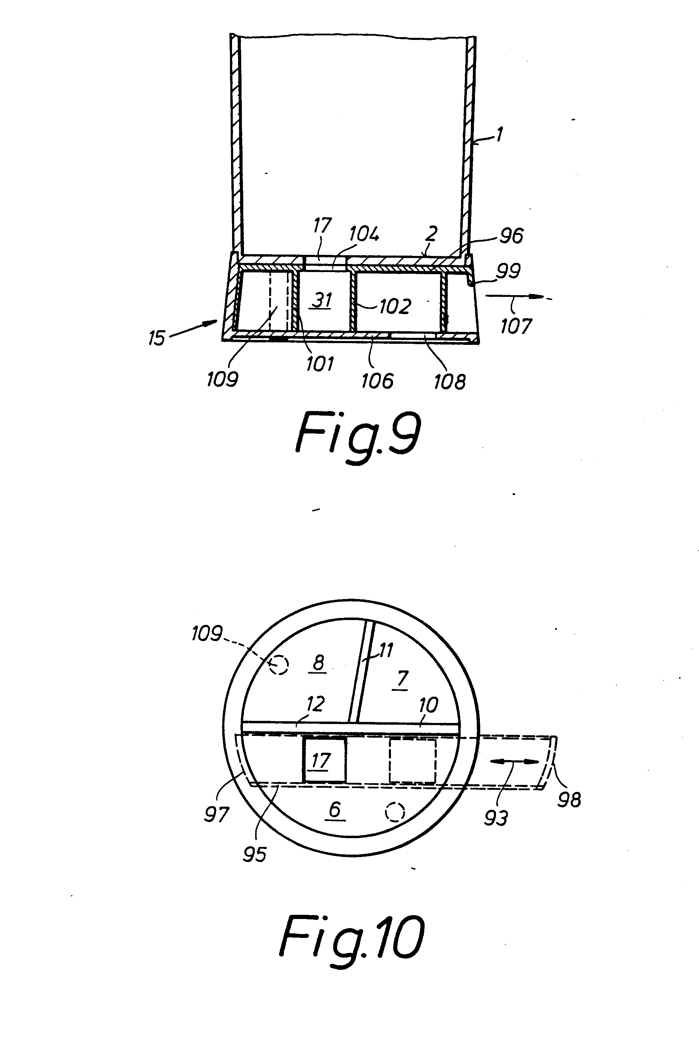

Fig. 8 einen Behälter, bei dem die Dosiervorrichtung an seiner
oberen Stirnseite vorgesehen ist, und

Fig. 9 und 10 eine weiter abgewandelte Ausführungsform eines
Behälters mit Dosiervorrichtung, bei dem die Dosiervorrichtung in einer senkrecht zur Behälterachse
stehenden Richtung verschiebbar ist.

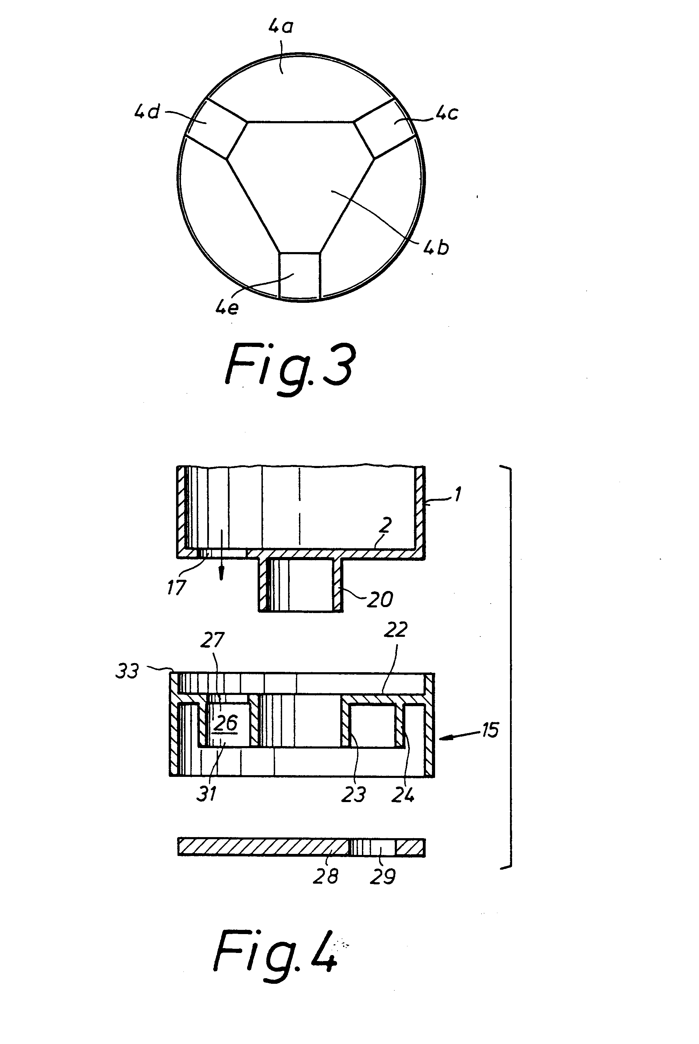

Fig. 1 zeigt in Teilschnittansicht eine erste Ausführungsform
eines Behälters zur Aufnahme von pulverförmigen flüssigen
Substanzen, vorzugsweise Kaffeepulver, Zucker und Milch.
Fig. 1 ist eine Schnittansicht entlang der Linie I - I'

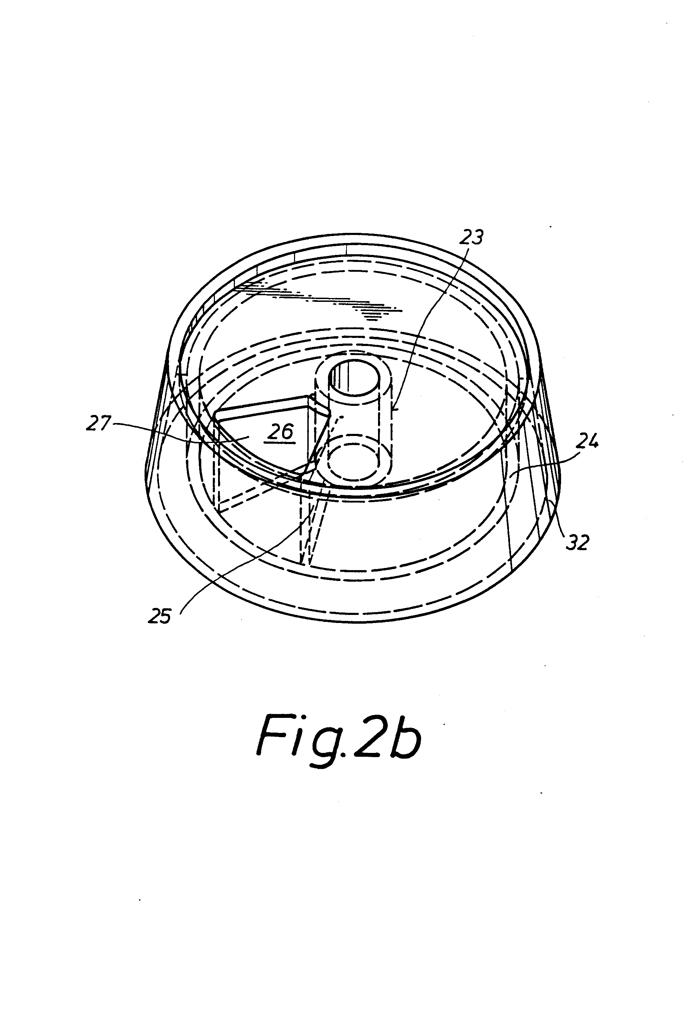

in Fig. 2. Dieser Behälter ist in Fig. 1 mit 1 bezeichnet
und hat vorzugsweise zylindrische Gestalt. Der Behälter 1
ist mit einem Boden 2 versehen. Auf der zum Boden 2 gegenüberliegenden Stirnseite 3 ist der Behälter mit einem Deckel 4
verschlossen, wobei der Deckel 4 mit Ausgabeöffnungen versehen ist, die gemäß Fig. 3 durch Klappdeckel verschließbar
sind. Der Deckel besteht nach Fig. 3 in an sich bekannter
Weise aus einem Grunddeckel 4a, der mit einer Vertiefung
versehen ist, in welche ein im wesentlichen sternförmiges
Kunststoffteil 4b eingesetzt und am Grunddeckel 4a befestigt
ist. Das etwa sternförmige Kunststoffteil 4b besitzt mehrere Klappdeckel 4c, 4d, 4e, die durch ein Filmscharnier am mittigen Kunststoffteil angelenkt sind. Derartige Deckel sind an sich bekannt. Die Öffnungen bzw. die zugehörigen Klappdeckel 4c, 4d, 4e sind in solcher Weise an dem Deckel 4 vorgesehen, daß ein Zugang zu den beispielsweise drei Kammern 6, 7, 8 (Fig. 2) ermöglicht wird, wobei der der Kammer 6 zugehörige Klappdeckel eine größere Öffnung abschließen kann, die zum Einfüllen, vorzugsweise von Kaffeepulver, in die Kammer 6 dient.

Wie Fig. 2 zeigt, sind die Kammern 6, 7, 8 durch entsprechende Wandungen 10, 11, 12 voneinander getrennt.

Am unteren Teil des Behälters 1, d.h. an der unteren, durch den Boden 2 festgelegten Stirnseite des Behälters ist ein vorzugsweise ringförmiger Aufsatz 15 vorgesehen, der zur Aufnahme einer Dosiervorrichtung 16 dient. Das grundsätzliche Prinzip der Dosiervorrichtung besteht darin, daß über eine im Boden 2 vorgesehene Öffnung 17, im folgenden Beschickungs-öffnung genannt, die Dosiervorrichtung 16 mit der pulverförmigen Substanz der Kammer 6, beispielsweise Kaffeepulver, auffüllbar ist. Die Dosiervorrichtung 16 besteht vorzugsweise aus einer Kammer mit noch zu beschreibenden Seitenwänden vorbestimmter Breite und Höhe, wodurch das Volumen der Dosiervorrichtung 16 definiert ist. Nach dem Füllen der Dosiervorrichtung 16 wird die Beschickungsöffnung 17 in noch zu beschreibender Weise geschlossen, während das in der Dosiervorrichtung enthaltene Kaffeepulver durch eine Entleerungsöffnung aus der Dosiervorrichtung 16 entfernbar ist. Auf diese Weise ist es möglich, Kaffeepulver aus der Kammer 6 jeweils mit einem vorgegebenen Volumen bzw. einer vorgegebenen Quantität aus dem Behälter 1 zu entnehmen, wobei das Volumen der Dosiervorrichtung 16 z.B. derart gewählt ist, daß das von ihr aufzunehmende Kaffeepulver derjenigen Menge entspricht, die für eine Tasse Kaffee aufzubringen ist. Bei dem Kaffeepulver handelt es sich hierbei um in heißem

021 20 44

Wasser selbstlöslichen Kaffee. Die anderen Zutaten wie
Zucker und Milch werden aus der Kammer 8 bzw. 7 über die
bereits erwähnten oberen Ausgabeöffnungen entnommen. Die
Kammern 6, 7, 8 werden in dem normal zu erwartenden Verbrauchsverhältnis entsprechend groß konzipiert, d.h. die
Kammer 6 für das Kaffeepulver hat das größte Volumen, die
Kammer 8 für Zucker und die Kammer 7 für Milch entsprechend
kleineres Volumen.

Im folgenden wird die in Fig. 1 gezeigte Ausführungsform
im Detail erläutert. Der Aufsatz 15,der zugleich die Standfläche des Behälters 1 darstellt, hat ringförmige Gestalt
und ist an der unteren Stirnseite des Behälters 1 drehfähig
befestigt. Etwa mittig ist an der unteren Stirnseite des
Behälters 1 ein ringförmiger Vorsprung 20 ausgebildet, der
als Aufnahmeteil für einen Zapfen 21 dient. Der Aufsatz 15
hat im Querschnitt betrachtet leicht konische Gestalt und
weist eine parallel zum Boden 2 verlaufende Wandung 22 auf,
die einen mittigen ringförmigen Flansch 23 trägt. An der neben dem
Boden 2 liegenden Wandung 22 ist ein ringförmiger Flansch 24
angeformt, so daß die beiden Flansche 23, 24 im wesentlichen konzentrisch zueinander an der Wandung 22 nach unten
abstehend ausgebildet sind und einen ringförmigen Raum
festlegen, der durch zwischen den beiden ringförmigen Flanschen
23, 24 radial zur Achse des Behälters 1 verlaufende Wandabschnitte 25, 26 unterbrochen ist. Die Wandabschnitte 25,
26 sind in Fig. 2 gestrichelt angedeutet. Die Wandabschnitte
25, 26 sowie die ringförmigen Flansche 23, 24 und die Wandung
22 definieren in Form einer Kammer die Dosiervorrichtung 16,
wobei die Wandung 22 zwischen den beiden Wandabschnitten 25,
26 eine Öffnung 27 enthält, die vorzugsweise der Größe der
Beschickungsöffnung 17 entspricht. Die Unterseite dieser
Kammer sowie des übrigen, durch die beiden Ringflansche
definierten Ringraumes ist offen und wird durch einen Deckel 28
geschlossen, der die ringförmigen Flansche 23, 24 vorzugsweise geringfügig übergreift und nach Fig. 1 mit einer Öffnung 29 zum Entleeren der Kammer versehen ist. Der Deckel 28 weist als Vorsprung den Zapfen 21 auf, der als integrales Teil zum Deckel 28 vorgesehen ist. Der Zapfen 21 sitzt nach seinem Einschieben in die durch den Vorsprung 20 festgelegte Öffnung 30 drehfest am Vorsprung 20 und hält den Aufsatz 15 an der unteren Stirnfläche des Behälters 1 derart, daß der Aufsatz 15 um die Achse des Behälters 1 drehfähig ist. Damit läßt sich in der in Fig. 1 gezeigten Drehstellung des Aufsatzes 15 die mit 31 bezeichnete Kammer über die Beschickungsöffnung 17 mit Kaffeepulver auffüllen, wonach der Aufsatz 15 um einen vorbestimmten Winkel gedreht wird, bis die Kammer 31 über der im Deckel 28 vorgesehenen Öffnung 27 zu liegen kommt, wodurch die Kammer 31 entleert werden kann. Die Öffnungen 27, 29 befinden sich jeweils zwischen den beiden Ringflanschen 16, 23 (Fig. 1, 2).
Die in Fig. 1 mit 23 und 24 bezeichneten Flansche der Wandung 22 müssen nicht, wie veranschaulicht, unter einem Winkel von 90° zur Wandung 22 stehen, sondern können auch leicht geneigt sein. Die an der Wandung 22 angesetzte und mit 32 bezeichnete schräge Ringfläche hat hauptsächlich optische Funktion und kann gegebenenfalls entfallen.

Zum leichteren Auffinden der beiden Drehstellungen, in welchem die Kammer 31 aufgefüllt und entleert wird, kann es vorteilhaft sein, entsprechende Anschläge vorzusehen, welche die Drehung des Ansatzes zwischen zwei Positionen begrenzen, die der Auffüll- und Entleerungsstellung des Aufsatzes 15 entsprechen. Diese Anschläge sind in Fig. 1 und 2 nicht gezeigt. Wie aus Fig. 1 hervorgeht, ist die Höhe des Aufsatzes 15 kleiner als die Höhe des Behälters 1. Die Höhe der Flansche 23, 24 entspricht etwa der Höhe des zylindrischen Vorsprunges 20.

Eine gegenüber Fig. 1 abgewandelte Ausführungsform des Behälters zeigt Fig. 4. Bei dieser Ausführungsform ist an der unteren Stirnseite des Behälters 1 etwa mittig zum
Boden 2 ein Vorsprung 20 in Gestalt eines ringförmigen
Flansches vorgesehen. Der Aufsatz 15 weist eine zum Behälter 1 zugewandte Wandung 22 auf, die mit konzentrischen
Ringflanschen 23, 24 versehen ist. Die Wandung 22 ist mit
einer im Bereich einer Kammer 31 nach oben weisenden Öffnung 27 versehen.
Der Aufsatz 15 wird auf den Flansch 20 aufgesetzt und ist
analog zu der Ausführungsform nach Fig. 1 durch einen geringfügig über die Wandung 22 nach oben, d.h. in Richtung
auf den Behälter 1 weisenden Ringflansch 33 drehfähig gegenüber dem Behälter bzw. seinem Boden 2 gelagert, sobald
der Aufsatz 15 von unten an dem Behälter 1 angesetzt ist.
Zur Befestigung dient ein Deckel 28 mit einer Öffnung 29,
der an dem Flansch 20 befestigt, beispielsweise verschweißt
wird. Nach dem Befestigen des Deckels 28 am Flansch 20
ist der Aufsatz 15 drehfähig am Behälter 1 gelagert. Es
ist ersichtlich, daß die Befestigung der Deckel 28 der
Ausführungsform nach Fig. 1 und 4 so zu wählen ist, daß
genügend Spiel verbleibt, um den Aufsatz 15 zwischen
Deckel 28 und Boden 2 drehfähig zu haltern. Im zusammengebauten Zustand ist bei der Ausführungsform nach Fig. 4
der Deckel 28 im Bereich der nach unten weisenden Flächen
des Flansches 20 mit dem Flansch 20 zu einer Einheit verschweißt. Durch Drehung des Aufsatzes 15 zwischen der
Beschickungs- und Entleerungsstellung ist die Entnahme
eines dosierten Volumens an Kaffeepulver über die Öffnungen 17, 27 aus
der Kammer 6   und die damit verbundene Dosierung sichergestellt, wonach das dosierte Volumen aus der Kammer 31
nach Drehung des Aufsatzes 15 über die Öffnung 29 wieder
abgegeben werden kann. Wie bei der vorhergehenden Ausführungsform kann die Drehbewegung des Aufsatzes 15 durch entsprechende Anschläge begrenzt sein. Der scheibenförmige Deckel 28 hat nach
Fig. 4 etwas kleineren Durchmesser als der Aufsatz 15 ähnlich der Ausführung nach
Fig. 1. Unter Bezugnahme auf Fig. 5 wird eine weitere Ausführungsform
beschrieben. Fig. 5 zeigt eine Teilschnittansicht ent-

- 10 -

sprechend Fig. 1 und 2 und zeigt einen Behälter 1 mit einem
Boden 2, in welchem, wie bereits beschrieben, eine Öffnung
17 ausgebildet ist. Der Aufsatz 15 besteht bei dieser
Ausführungsform aus einem ringförmigen Teil mit einem Boden 35.
Senkrecht vom Boden 35 abstehend sind ringförmig verlaufende, nach oben ragende
Flansche 36, 37, vorgesehen, wobei die Flansche 36, 37
konzentrisch zueinander liegen und der Flansch 37 eine
Klemmhülse bildet, in die ein Zapfen 38 klemmend bzw.
drehfest eingeschoben wird, der eine kreisförmige Platte oder Scheibe
39 trägt. Der Flansch 36 dient zur Begrenzung der Kammer 31
zur Behälterachse hin und entspricht dem inneren Flansch 23 in
Fig. 1. Von den die Seiten der Kammer 31 festlegenden
Wänden ist in Fig. 5 nur die Wand 26 erkennbar. Der Aufsatz 15 hat die Form eines umgedrehten Deckels und greift mit den
Enden seines vom Boden 35 etwa senkrecht abstehenden Wandabschnittes 40 in eine ringförmige Ausnehmung 44, die im
Behälter 1 etwa in Höhe des Bodens 2 ausgebildet ist. Der
Behälter 1 ist an seiner unteren, durch den Boden 2 definierten Stirnseite mit einem nach unten ragenden Ringflansch 42 versehen,
dessen Höhe etwa der Höhe des Wandabschnittes 40 entspricht.
Durch das Einrasten der Enden des Wandabschnittes 40 in
die mit 44 bezeichnete Ringnut sitzt der Aufsatz 15 drehfähig am unteren Teil des Behälters 1 und trägt in drehfester Anordnung die Platte 39. Die Öffnung 27 in der Platte
39 ermöglicht das Auffüllen der Kammer 31, sobald sie in
Deckung gelangt mit der Beschickungsöffnung 17. Die pulverförmige Substanz aus der Kammer 6 gelangt
über die Öffnungen 17, 27 in die Kammer 31, deren Volumen
festgelegt ist durch einen Teil des Bodens 35, durch einen
Teil der Flansche 42, 36 und die Wände 25, 26. Durch Drehung
des Aufsatzes 15 derart, daß eine seitliche Öffnung 45 des
Aufsatzes 15 in Deckung gelangt mit einer seitlichen Öffnung 46 in dem Ringflansch 42 läßt sich der Inhalt in der Kammer
31 durch seitliches Kippen des gesamten Behälters 1 entleeren. Allen Ausführungsformen nach Fig. 1 bis 5 ist gemeinsam, daß nach einem Verdrehen des Aufsatzes 5 aus
der in Fig. 1, 4 und 5 gezeigten Stellung heraus die Beschickungsöffnung 17 durch die Wandung 22 bzw. die Platte 39
verschlossen wird.

Bei einer weiter abgewandelten Ausführungsform, die in Fig.
6 gezeigt ist, sitzt der Aufsatz 15 drehfest an der unteren
Stirnseite des Behälters 1 und weist eine die Dosiervorrichtung 16 bildende Kammer 31 auf, die Teil des Aufsatzes
15 ist und damit im Gegensatz zu den vorstehenden Ausführungsformen stationär an der unteren Seite des Behälters 1 vorgesehen ist. Zum Füllen der Kammer 31 dient eine drehfähige
Scheibe 50, die zwischen dem Aufsatz 15 und dem Behälter
1 angeordnet ist und über einen Hebel 51 oder dergleichen
in einem quer zur Behälterachse ausgebildeten Schlitz 52
des Aufsatzes 15 betätigbar ist. Die Scheibe 50 weist eine
in Deckung mit der Öffnung 17 verbringbare Öffnung 52 auf
und ist zwischen der in Fig. 6 gezeigten Stellung zum Beschicken der Kammer 31 und in der nicht gezeigten Stellung,
in welcher die Scheibe 50 die Öffnung 17 von unten her abschließt, durch Anschläge arretiert. Geführt wird die
Scheibe 50 durch eine mittige Öffnung, die in dem in Fig. 6
gezeigten Zustand auf dem hülsenförmigen Teil 20 des Behälters 1 aufliegt. Eine weitere drehfähige Scheibe 55 ist
unterhalb der Kammer 31 vorgesehen und enthält eine Entleerungsöffnung 56 sowie eine mittige Öffnung 57. Die
Scheibe 55 liegt nach Fig. 6 von unten an der Hülse 20 an und wird
durch einen Klemmzapfen 58 o.dgl. drehfähig zur Hülse 20
gelagert. Eine Aussparung oder ein Schlitz im Aufsatz 15
ermöglicht eine Drehung der Scheibe 55 mit Hilfe eines
Betätigungsgliedes 60. Die Kammer 31 hat, wie bei den vorher beschriebenen Ausführungsformen, seitliche Wände 25, 26,
die zusammen mit den bei dieser Ausführungsform am Aufsatz 15 ausgebildeten Ringflanschteilen 61, 62 einerseits und den
beiden Scheiben 50, 55 das Dosenvolumen festlegen. Zum
Beschicken der Kammer 31 wird die obere Scheibe 50 soweit
gedreht, daß ihre Öffnung 52 in Deckung mit der Beschickungsöffnung 17 gelangt, worauf die pulverförmige Substanz in
die Kammer 31 gelangt. Nach dem Schließen der Beschickungsöffnung 17 durch Drehen der Scheibe 50 ist zum Entleeren
der Kammer 31 die untere Scheibe 55 so weit zu drehen, daß
ihre Öffnung 56 in Ausrichtung zur Kammer 31 gelangt.

Bei der in Fig. 7 dargestellten Ausführungsform ist an
der unteren Seite des Behälters 1 ein Aufsatz 15 mittels
eines Befestigungszapfens 58 drehfest gelagert, in dem
der Zapfen 58 in den als Klemmhülse dienenden Vorsprung
20 eingreift, wie er bei der Ausführungsform nach Fig. 6
vorgesehen ist. Der Zapfen 58 hält damit den Aufsatz 15
an der Unterseite des Behälters 1. Zwischen dem Aufsatz 15
und dem Boden 2 des Behälters 1 befindet sich ein drehfähiges
Teil, bestehend aus einer Scheibe oder Platte 65, an der
in Fig. 7 nach unten weisende zueinander exzentrische Ringflansche 66, 67 ausgebildet sind. In der in Fig. 7 gezeigten
Drehstellung befindet sich die Scheibe 65 mit ihrer Öffnung 68 etwa in Deckung zur Beschickungsöffnung 17 des Behälters 1,
wobei die Kammer 31 Seitenwände 25, 26 aufweist, die an
der Scheibe 65 angeformt sind. Der Boden der Kammer 31
wird bei der Ausführungsform nach Fig. 7 durch einen
Boden des Aufsatzes 15 gebildet, der mit 70 bezeichnet ist.
Durch Bewegung eines Betätigungsgliedes 71, das in fester
Verbindung mit dem Ringflansch 67 steht und entlang einer
Aussparung oder eines Schlitzes im Aufsatzteil 15 bewegbar ist, wird die Kammer 31 innerhalb des Aufsatzes 15
um die Achse des Behälters 1 gedreht, bis sie über eine
mit 56 bezeichnete Öffnung im Boden 70 gelangt, wodurch
die Entleerung der Kammer 31 bewirkt wird. Zur Führung
der Scheibe 65 ist diese mit einer mittigen Öffnung oder Hülse versehen, durch welche das Hülsenteil 20 im zusammengesetzten
Zustand nach Fig. 7 hindurch geht. Die im wesentlichen durch
die Scheibe 65 mit den daran angeformten Ringflanschen 66,
67 gebildete Dosiervorrichtung wird beim Zusammenbau auf
die Hülse 20 aufgesetzt, wonach der Aufsatz 15 aufgesteckt
wird. Um einen Abschluß mit dem Behälter 1 zu bilden, hat
der Aufsatz 15 im Querschnitt gesehen leicht konische Form,
so daß seine nach oben weisenden Endflächen 73 in Anlage mit
der Außenwandung des Behälters 1 gelangen. Die Halterung des
Aufsatzes 15 und des zwischen dem Boden 70 und dem Boden 2
drehfähig geführten Teiles 65, 66, 67 am Behälter 1 wird
durch den Zapfen 58 gewährleistet.

Fig. 8 zeigt eine weiter abgewandelte Ausführungsform eines
Behälters 1 mit Dosiervorrichtung. Die Dosiervorrichtung
16 befindet sich bei dieser Ausführungsform an der oberen
Stirnseite des Behälters 1. Zur Aufnahme der Dosiervorrichtung 16 ist der Behälter 1 an seiner oberen Stirnseite
mit einer die Oberseite im wesentlichen abschließenden
Wandung 75 versehen, die eine zu einer Kammer führende
Öffnung 76 enthält. An der Wandung 75 etwa mittig nach
oben abstehend ist ein hülsenförmiges Teil 77 ausgebildet,
das nach oben vorspringt und zur Aufnahme eines Befestigungszapfens 86 dient. Dieses Teil 77 entspricht im wesentlichen
z. B. dem Vorsprung 20 nach Fig. 1. Auf der Stirnwand 75 ist
eine Scheibe 79 aufgesetzt, die nach oben abstehende Ringflansche 80, 81 trägt und ähnlich dem in Fig. 7 mit 65, 66,
67 bezeichneten Teil ausgebildet ist. Die Scheibe 79
enthält eine Öffnung 82, die zu der Kammer 31 führt,
wobei die Kammer 31 durch den Seitenwänden 25, 26 entsprechende Wände und die bereits erwähnten Ringflansche 80, 81
definiert ist. Die Scheibe 79 weist ferner eine mittige
Öffnung 83 auf, so daß sie auf das hülsenförmige Teil 77
aufgesetzt werden kann. Nach Montage der Scheibe 79 wird
eine als feststehender Deckel dienende kreisförmige Platte 85 aufgelegt und durch einen Zapfen 86 an dem Behälter 1 befestigt, wobei der Zapfen 86 in das hülsenförmige Teil 77 klemmend eingeschoben wird. Die Platte oder der Deckel 85 können vorzugsweise mit einem Rohrabschnitt 87 versehen sein, der als Ausgießer dient. Durch einen Drehring 88, der konzentrisch zu den Ringflanschen 80, 81 an der Scheibe 79 angeformt ist, läßt sich eine Drehung der Kammer 31 zwischen einer Position erreichen, in welcher die Öffnung 82 sich in Deckung mit der Öffnung 76 befindet, und einer zweiten Position, in welcher die Kammer mit der Öffnung 84 des Ausgießers 87 in Verbindung steht. Durch Kippen des Behälters 1 läßt sich die Kammer 31 in der in Fig. 8 gezeigten Funktionsstellung füllen, wonach durch Drehung des Drehringes 88 und nochmaliges Kippen eine Ausgabe der in der Kammer 31 befindlichen Substanz über den Ausgießer 87 ermöglicht wird. Ein weiterer mit 90 bezeichneter Drehring sitzt am Außenumfang des Behälters 1 unterhalb des Drehringes 88 und ermöglicht das Verschließen von wenigstens einer Streuöffnung 91, die seitlich des Behälters 1 vorgesehen ist und zu einer der anderen Kammern führt. Auf der zur Dosiervorrichtung 16 abgewandten Seite des Behälters 1 ist ein abnehmbarer Deckel 92 vorgesehen, der ein Nachfüllen sämtlicher innerhalb des Behälters 1 gebildeter Kammern ermöglicht.

Die Fig. 9 und 10 zeigen eine weitere Ausführungsform des Behälters mit Dosiervorrichtung. Der Behälter 1 ist, wie in Verbindung mit Fig. 1 beschrieben, an seiner unteren Seite durch einen Boden 2 abgeschlossen, in dem eine Beschickungsöffnung 17 ausgebildet ist, die zu der Kammer 6 des Behälters 1 führt. Fig. 10 zeigt eine schematische Draufsicht und zeigt die Beschickungsöffnung 17, die im Bereich der Kammer 6 vorgesehen ist, wobei in Fig. 10 einmal die Stellung veranschaulicht ist, in der die Kammer 31 aufgefüllt wird, während gestrichelt die Stellung gezeigt ist, in welcher ein Entleeren der Kammer 31 erreicht wird. Anstelle eines drehfähigen Teiles, wie es unter Bezugnahme auf die Fig. 1 bis 8 beschrieben wurde, ist bei der
Ausführungsform nach Fig. 9 und 10 eine verschiebbare Dosiervorrichtung vorgesehen, die entlang eines Pfeiles 93,
also senkrecht zur Achse des Behälters, verlagerbar ist. Bei
dieser Ausführungsform wird im wesentlichen das Prinzip
einer "Schublade" angewandt. Das die Dosiervorrichtung bildende
Teil ist im Aufsatzteil 15 durch eine im wesentlichen gerade
verlaufende Wand geführt, die als Verlängerung der die Kammern
festlegenden Wandabschnitte 10, 12 an der Stirnseite bzw.
dem Boden 2 nach unten fortgesetzt ist, und durch eine weitere
in Fig. 10 gestrichelt angedeutete gerade Wand 95. Im einzelnen besteht die Dosiervorrichtung aus einem oberen
streifenförmigen Teil 96, das gemäß Fig. 10 gebogene und
an die Form des Behälters bzw. des Aufsatzes 15 angepaßte
Stirnflächen 97, 98 besitzt. Durch die gebogenen bzw. abgerundeten Stirnflächen 97, 98 wird ein vollständiges Hineinschieben des Teiles 96 bis zur Seitenwandung des Aufsatzes
15 gewährleistet und andererseits ein Abschluß im Bereich
eines Griffes 99 an der Stirnfläche 98 in Anpassung an die
Form des Behälters bzw. des Aufsatzes erreicht. An dem Teil
96 sind nach unten abstehend vier Wände vorgesehen, von denen
in Fig. 9 die beiden zueinander parallelen Wände 101, 102
gezeigt sind und mit den beiden anderen zwei Seitenwänden
die Kammer 31 der Dosiervorrichtung festlegen. Durch eine
Öffnung 104 in dem Teil 96 ist eine Beschickung der Kammer
31 über die Öffnung 17 in der in Fig. 9 gezeigten Position
möglich, wobei die unteren Kanten der Wände 101, 102 auf
einem Boden 106 gleitend aufliegen, der einen Teil des
Aufsatzes 15 darstellt. Durch Herausziehen des Teiles 96
in Richtung des Pfeiles 107 in Fig. 9 läßt sich die Kammer
31 so weit verlagern, daß sie in Deckung mit einer Öffnung
108 im Boden 106 des Aufsatzes 15 gelangt, so daß eine Entleerung der Kammer 31 möglich wird. Zur Halterung des Aufsatzteiles 15 dienen in Fig. 9 strichpunktiert angedeutete Befestigungsstopfen 109. Somit ist bei der in Fig. 9 und
10 gezeigten Ausführungsform die Dosiervorrichtung bzw.
deren Kammer 31 zwischen dem Behälter 1 und dem Aufsatz 19
verschiebbar vorgesehen.

Bei allen vorstehend beschriebenen Ausführungsformen läßt
sich die Dosiervorrichtung entweder über eine Beschickungsöffnung mit einer der im Behälter 1 vorgesehenen Kammern
in Verbindung bringen oder mit einer Öffnung zum Entleeren
der Kammern, wobei die Öffnung zum Entleeren der Kammer 31
an der unteren Seite oder seitlich des Aufsatzes 15 vorgesehen ist. Die Öffnungen, die einen Zugang zu den anderen
Kammern 7, 8 ermöglichen, sind bei den Ausführungsformen
nach Fig. 1 bis 7 und 9 an der zum Aufsatz 15 gegenüberliegenden Seite des Behälters 1 vorgesehen und durch Klappdeckel o. dgl. verschließbar, wie in Verbindung mit Fig. 3
beschrieben ist. Anstelle von insgesamt drei Kammern können
mehr oder auch weniger Kammern im Behälter 1 vorgesehen
sein. Um insbesondere zwischen der Dosiervorrichtung, dem Behälterboden 2 und dem Aufsatz eine ausreichende Abdichtung zu
gewährleisten, können zusätzliche Dichtungsnuten und/oder
Dichtungsrillen vorgesehen werden, die bei den vorstehend
beschriebenen Ausführungsformen zum Zwecke der vereinfachten
Beschreibung nicht erläutert sind.

Die Erfindung schafft einen Behälter für flüssige und pulverförmige Substanzen, der eine dosierte Entnahme wenigstens
einer dieser Substanzen, vorzugsweise einer pulverförmigen
Substanz ermöglicht, während die übrigen Substanzen über
verschließbare Ausgabeöffnungen undosiert entnommen werden
können. Zur Aufnahme mehrerer unterschiedlicher Substanzen
ist der Behälter in zwei, drei oder mehr Kammern unterteilt,
von welchen eine über eine Beschickungsöffnung mit der Dosiervorrichtung in Verbindung bringbar ist. Die Dosiervorrichtung ist bei allen Ausführungsformen innerhalb eines Aufsatzes vorgesehen, der als zusätzliches Gehäuseteil an
einer der Stirnseiten des Behälters befestigt ist und eine
Kammer enthält, die das zu dosierende Quantum durch ihr
Volumen befestigt. Diese Kammer ist zwischen einer Auffüllstellung und einer Entladestelltung bewegbar oder durch
ein Betätigungsglied zum Auffüllen mit der zugehörigen
Kammer in Verbindung bringbar, wonach die Beschickungsöffnung
durch das Betätigungsglied verschlossen und eine Ausgabeöffnung durch ein weiteres Betätigungsglied geöffnet wird.
Die Kammern des Behälters sind im wesentlichen nebeneinanderliegend vorgesehen und durch den Behälter durchsetzende
Trennwände voneinander getrennt. Der Durchmesser des Aufsatzes
15 entspricht im wesentlichem dem des Behälters 1; die Höhe
der Dosiervorrichtung ist praktisch gleich der des Aufsatzes
15, wie aus der Zeichnung hervorgeht, wobei die die Bewegung
der Dosiervorrichtung 16 bzw. des Aufsatzes 15 gegenüber dem
Behälter 1 ermöglichenden Toleranzen einzuhalten sind.

Mit Ausnahme der Ausführungsform nach Fig. 9 und 10 besteht
die Dosiervorrichtung im wesentlichen aus einer scheibenförmigen Platte 22, 35, 65, 79, die wenigstens zwei zueinander
konzentrische, von der Platte wegstehende Ringflansche 23, 24,
36, 42, 66, 67, 80, 81 trägt, durch welche in Verbindung
mit zwischen den Ringflanschen angeordneten Wandabschnitten
25, 26  die nach einer Seite, d.h. nach oben oder unten offenen Kammer 31 festgelegt wird.

Nach den vorstehenden Erläuterungen sind die im Boden des Behälters und in der Dosiervorrichtung ausgebildeten Einfüllöffnungen
etwa in gleichem Radius von der Behälterachse und etwa gleich
groß auszubilden. Ein weiteres Teil in Form einer Scheibe bzw.
eines Deckels 28, 39, 85 oder als Teil 70 des Aufastzes 15
dient zum Abschließen der zur Einfüllöffnung abgewandten Seite
des Ringraumes und enthält eine nach unten oder nach der Seite
gerichtete Ausgabeöffnung. Der äußere Ringflansch ist mit Ausnahme der Ausführungsform nach Fig. 5 mit kleinerem Durchmesser zum Behälterdurchmesser gewählt und wird von einer als Drehring fungierenden kreisförmigen Wand umgeben, die gegebenenfalls entfallen kann.

Obgleich vorstehend angegeben ist, daß der erfindungsgemäße Behälter zur Aufnahme von pulverförmigen und flüssigen Substanzen verwendet werden soll, wird er vorzugsweise ausschließlich zur Aufnahme von pulverförmigen Substanzen benutzt, insbesondere Kaffeepulver, Milchpulver, Zucker oder dergleichen.

# REINHARD · SKUHRA · WEISE
## PATENTANWÄLTE · EUROPEAN PATENT ATTORNEYS

Reinhard · Skuhra · Weise · Leopoldstraße 51 · D-8000 München 40

DR. ERNST STURM (1951-1980)
DR. HORST REINHARD
DIPL.-ING. UDO SKUHRA
DIPL.-ING. REINHARD WEISE

LEOPOLDSTRASSE 51
D-8000 MÜNCHEN 40

TELEFON     : 0 89/33 40 78
TELEX       : 5 212 839 isar d
TELEFAX : 089/340 14 79 (II + III)
TELEGRAMM : ISARPATENT

Ihr Zeichen/your ref.

Unser Zeichen/our ref.

P2360   S/kn

Datum/date

24. Januar 1986

Hofmann GmbH, Kreuzwertheim

## P a t e n t a n s p r ü c h e

1. Behälter mit wenigstens zwei Kammern zur Aufnahme flüssiger und pulverförmiger Substanzen, insbesondere Kaffepulver, Milch und/oder Zucker, und mit wenigstens einer Ausgabeöffnung d a d u r c h   g e k e n n z e i c h n e t , daß an seiner einen Stirnseite (2) ein Aufsatzteil mit einer Dosiervorrichtung (16) vorgesehen ist, daß in der gleichen Stirnseite eine Öffnung (17) zu einer der Kammern (6) zum Beschicken der Dosiervorrichtung mit einem Teil der in der Kammer befindlichen Substanz, z. B. Kaffeepulver, angeordnet ist, und daß im Aufsatz (16) eine Öffnung (29, 46, 56, 88, 108) zur Entleerung der Dosiervorrichtung ausgebildet ist.

0212044

2. Behälter nach Anspruch 1, dadurch gekennzeichnet, daß der Aufsatz (15) ringförmige Gestalt hat und die Dosiervorrichtung (16) enthält.

3. Behälter nach Anspruch 1 oder 2, dadurch gekennzeichnet, daß die Dosiervorrichtung (16) eine Kammer (31) aufweist, die eine mit der Beschickungsöffnung (17) in Verbindung bringbare Öffnung (27) und eine mit der Entleerungsöffnung (29, usw.    ) in Verbindung bringbare weitere Öffnung aufweist.

4. Behälter nach einem der Ansprüche 1 bis 3, dadurch gekennzeichnet, daß die Kammer (31) der Dosiervorrichtung (16) aus einer Scheibe (22, 39, 50, 65, 79) besteht, an welcher zwei zueinander konzentrische Ringflansche angesetzt sind, daß zwei zwischen den Ringflanschen verlaufende, die Kammer (31) festlegende Seitenwände (25, 26) vorgesehen sind und daß die Scheibe zwischen den Seitenwänden eine mit der Beschickungsöffnung (17) in Deckung bringbare Öffnung enthält.

5. Behälter nach Anspruch 4, dadurch gekennzeichnet, daß die Kammer auf der zur Scheibe (22, 39, 50, 65, 79) abgewandten Seite offen ist.

6. Behälter nach Anspruch 4 oder 5, dadurch gekennzeichnet, daß die Kammer (31) der Dosiervorrichtung (16) im Aufsatz (15) relativ zur Beschickungsöffnung (17) bewegbar angeordnet ist.

7. Behälter nach einem der Ansprüche 1 bis 5, dadurch gekennzeichnet, daß die Kammer (31) der Dosiervorrichtung (16) im Aufsatz (15) um die Achse des Behälters (1) drehbar vorgesehen ist.

0212044

8. Behälter nach einem der vorangehenden Ansprüche, dadurch gekennzeichnet, daß die Kammer (31) der Dosiervorrichtung (16) mit dem ringförmigen Aufsatz (15) zur gleichzeitigen Drehung mit dem Aufsatz fest verbunden ist und daß der ringförmige Aufsatz (15) drehfähig an der Stirnseite des Behälters gelagert ist.

9. Behälter nach wenigstens einem der Ansprüche 1 bis 6, dadurch gekennzeichnet, daß eine Einrichtung (50) zum Öffnen bzw. Schließen der Beschickungsöffnung (17) vorgesehen ist.

10. Behälter nach Anspruch 9, dadurch gekennzeichnet, daß eine Einrichtung (55, 60) zum Öffnen bzw. Schließen der Kammer (31) der Dosiervorrichtung vorgesehen ist (Fig. 6).

11. Behälter nach einem der vorangehenden Ansprüche, dadurch gekennzeichnet, daß die Kammer (31) der Dosiervorrichtung (16) innerhalb des ringförmigen Aufsatzes (15) drehfähig vorgesehen ist.

12. Behälter nach einem der vorangehenden Ansprüche, dadurch gekennzeichnet, daß die Entleerungsöffnung für die Kammer (31) der Dosiervorrichtung (16) seitlich oder an der zum Behälter abgewandten Stirnfläche des Aufsatzes (15) ausgebildet ist.

0212044

Fig.1

Fig.2a

0212044

23

27

26

24

32

25

*Fig.2b*

**Fig.3**

**Fig.4**

0212044

**Fig.5**

**Fig.8**

Fig.6

Fig.7

0212044

**Fig.9**

**Fig.10**

0212044

Nummer der Anmeldung

**Europäisches Patentamt**

**EUROPÄISCHER RECHERCHENBERICHT**

| | EINSCHLÄGIGE DOKUMENTE | | EP 86100950.4 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 3 130 874 (BULMER) <br> * Gesamt * <br> ---- | 1 | A 47 G 19/34 |

|  | RECHERCHIERTE SACHGEBIETE (Int. Cl.4) |
|---|---|
|  | A 47 G <br> A 47 J <br> B 65 D |

Der vorliegende Recherchenbericht wurde für alle Patentansprüche erstellt.

| Recherchenort | Abschlußdatum der Recherche | Prüfer |
|---|---|---|
| WIEN | 15-10-1986 | TRATTNER |